# EUROPEAN PATENT APPLICATION

(11) **EP 3 193 247 A1**
(43) Date of publication of application: **19.07.2017**
(21) Application number: 15839208.4
(22) Date of filing: 11.08.2015
(51) Int. Cl.: G06F 3/0488, G06F 3/048, G06F 21/32

(54) **METHOD FOR CONTROLLING LOCK STATUS OF APPLICATION AND ELECTRONIC DEVICE SUPPORTING SAME**

(30) Priority: 11.09.2014 CN 201410460429; 06.08.2015 KR 20150110884
(71) Applicant: Samsung Electronics Co., Ltd., Gyeonggi-do 16677 (KR)
(72) Inventor: LI, Suxia, Nanjing Jiangsu 210019 (CN); TAN, Shu, Nanjing Jiangsu 210019 (CN); LI, Yuanyou, Nanjing Jiangsu 210019 (CN); YU, Chao, Nanjing Jiangsu 210019 (CN); MEI, Chonghua, Nanjing Jiangsu 210019 (CN); LI, Fan, Nanjing Jiangsu 210019 (CN); SONG, Feng, Nanjing Jiangsu 210019 (CN); YANG, Hong, Nanjing Jiangsu 210019 (CN); CAO, Jian, Nanjing Jiangsu 210019 (CN); GAO, Jingting, Nanjing Jiangsu 210019 (CN); GE, Shifei, Nanjing Jiangsu 210019 (CN); ZHONG, Yuan, Nanjing Jiangsu 210019 (CN)
(74) Representative: Gulde & Partner
(86) International application number: PCT/KR2015/008377
(87) International publication number: WO 2016/039529

(57) **Abstract**

Provided are a method of controlling a lock status of an application and an electronic device supporting the method. The method includes receiving a first touch input on a first icon displayed on a screen, detecting a first duration for which the first touch input is maintained, and setting a lock status of an application corresponding to the first icon in response to the first duration being greater than or equal to a first threshold period.

## Description

### TECHNICAL FIELD

A disclosed embodiment relates to a method of controlling a lock status of an application and an electronic device supporting the same.

### BACKGROUND ART

The astounding progress in information and communication technologies, semiconductor technologies, and so forth has increased the spread and use of various portable terminals. With the wide spread of the portable terminals, users have used them for various purposes. For example, a user may use a portable terminal as a storage medium for storing personal information. In line with this, security-related techniques for portable terminals have been developed.

A screen lock function of a portable terminal is an example of a security-related technique for portable terminals. For instance, a user may set a screen clock of a portable terminal by setting a passcode, a lock pattern, etc., to prevent others from using the portable terminal of the user without the user's permission.

### DETAILED DESCRIPTION OF THE INVENTION

### TECHNICAL PROBLEM

According to a disclosed embodiment, there is provided a method of controlling a lock status of an application, whereby a user may set or release the lock status of the application through interaction with respect to an icon corresponding to the application, and an electronic device supporting the method.

### TECHNICAL SOLUTION

A method of controlling a lock status of an application by an electronic device according to an embodiment includes receiving a first touch input on a first icon displayed on a screen, detecting a first duration for which the first touch input is maintained, and setting a lock status of an application corresponding to the first icon in response to the first duration being greater than or equal to a first threshold period.

### ADVANTAGEOUS EFFECTS OF THE INVENTION

According to a disclosed embodiment, through interaction with respect to an icon corresponding to an application, a lock status of the application may be easily and simply set or released.

### BRIEF DESCRIPTION OF THE DRAWINGS

FIG. 1 is a conceptual view for describing a method of controlling a lock status of an application according to an embodiment of the present disclosure;
FIG. 2 is a block diagram of an electronic device according to an embodiment of the present disclosure;
FIG. 3 is a flowchart of a method of controlling a lock status of an application according to an embodiment of the present disclosure;
FIG. 4 is a flowchart of a method of setting a lock status of an application according to an embodiment of the present disclosure;
FIG. 5 is a flowchart of a method of setting a lock status of an application by using fingerprint information according to an embodiment of the present disclosure;
FIG. 6 is a flowchart of a method of controlling a lock status of an application according to another embodiment of the present disclosure;
FIG. 7 is a flowchart of a method of controlling a lock status of an application according to another embodiment of the present disclosure;
FIG. 8 is an exemplary diagram of a method of controlling a lock status of an application according to another embodiment of the present disclosure; and
FIG. 9 is a flowchart of a method of releasing a lock status of an application according to an embodiment of the present disclosure.

### BEST MODE

A method of controlling a lock status of an application by an electronic device according to an embodiment includes receiving a first touch input on a first icon displayed on a screen, detecting a first duration for which the first touch input is maintained, and setting a lock status of an application corresponding to the first icon in response to the first duration being greater than or equal to a first threshold period.

The setting of the lock status may include detecting a first fingerprint from the first touch input and registering the first fingerprint as authentication information related to releasing of the lock status.

The registering of the first fingerprint may include comparing the first fingerprint with a fingerprint previously registered in the electronic device and registering the first fingerprint in response to being determined that the first fingerprint is identical to the previously registered fingerprint based on a result of the comparing.

The method may further include releasing the lock status of the application corresponding to the first icon, in which the releasing of the lock status may include receiving a second touch input on the first icon, detecting a second duration for which the second touch input is maintained, detecting a second fingerprint from the second touch input based on a result of comparing the second duration with a second threshold period, comparing the second fingerprint with the registered first fingerprint, and releasing the lock status in response to being determined that the second fingerprint is identical to the first fingerprint based on a result of the comparing the second fingerprint with the registered first fingerprint.

The setting of the lock status may include registering a plurality of different fingerprints as authentication information related to the releasing of the lock status, in which the releasing of the lock status may include comparing the second fingerprint with at least one of the plurality of registered fingerprints and releasing the lock status in response to being determined that the second fingerprint is identical to the at least one of the plurality of registered fingerprints based on a result of the comparing the second fingerprint with at least one of the plurality of registered fingerprints.

The method may further include receiving a third touch input on a second icon displayed on the screen, detecting a third duration for which the third touch input is maintained, and setting a lock status for an application corresponding to the second icon in response to the third duration being greater than or equal to a third threshold period, in which the setting of the lock status for the application corresponding to the second icon may include detecting a third fingerprint from the third touch input and registering the third fingerprint as authentication information related to the releasing of the lock status of the application corresponding to the second icon, and in which the first fingerprint and the third fingerprint may be identical to or different from each other.

The first threshold period and the third threshold period may be identical to or different from each other, and a user having the first fingerprint and a user having the third fingerprint may be identical to or different from each other.

The setting of the lock status may include receiving a drag input in response to the first duration being greater than or equal to the first threshold period and setting a lock status for at least one of applications corresponding to at least one third icon included in a region corresponding to the drag input and applications corresponding to at least one fourth icon disposed on a trajectory path of the drag input.

The setting of the lock status may include detecting a fingerprint from the first touch input and registering the detected fingerprint as authentication information related to the releasing of the lock status of each of the at least one application.

The setting of the lock status may include receiving at least one of a lock pattern, a passcode, and a personal identification number (PIN) and registering the lock pattern, the passcode, or the PIN as the authentication information related to the releasing of the lock status.

An electronic device according to an embodiment includes a display configured to display a first icon, an inputter configured to receive a first touch input on the first icon, and a controller configured to detect a first duration for which the first touch input is maintained and to set a lock status for an application corresponding to the first icon in response to the first duration being greater than or equal to a first threshold period.

The electronic device may further include a fingerprint sensor configured to detect a first fingerprint from the first touch input, in which the controller is further configured to register the first fingerprint as authentication information related to releasing of the lock status.

The controller may be further configured to compare the first fingerprint with a fingerprint previously registered in the electronic device and to register the first fingerprint if the first fingerprint and the previously registered fingerprint are identical to each other as a result of the comparing the second fingerprint with the registered first fingerprint.

The inputter may be further configured to receive a second touch input on the first icon, and the controller may be further configured to detect a second duration for which the second touch input is maintained, to detect a second fingerprint from the second touch input based on a result of comparing the second duration with a second threshold period, to compare the second fingerprint with the registered first fingerprint, and to release the lock status in response to being determined that the second fingerprint is identical to the first fingerprint based on a result of the comparing the second fingerprint with at least one of the plurality of registered fingerprints.

The controller may be further configured to register a plurality of different fingerprints as authentication information related to the releasing of the lock status, to compare the second fingerprint with at least one of the plurality of registered fingerprints, and to release the lock status in response to being determined that the second fingerprint is identical to the at least one of the plurality of registered fingerprints based on a result of the comparing.

The inputter may be further configured to receive a third touch input on a second icon displayed on the screen, and the controller may be further configured to detect a third duration for which the third touch input is maintained, to set a lock status for an application corresponding to the second icon in response to the third duration being greater than or equal to a third threshold period, to detect a third fingerprint from the third touch input, and to register the third fingerprint as authentication information related to the releasing of the lock status of the application corresponding to the second icon, and in which the first fingerprint and the third fingerprint may be identical to or different from each other.

The first threshold period and the third threshold period may be identical to or different from each other.

The inputter may be further configured to receive a drag input in response to the first duration being greater than or equal to the first threshold period, and the controller may be further configured to set a lock status for at least one of applications corresponding to at least one third icon included in a region corresponding to the drag input and applications corresponding to at least one fourth icon disposed on a trajectory path of the drag input.

The electronic device may further include a fingerprint sensor configured to detect a fingerprint from the first touch input, in which the controller may be further configured to register the detected fingerprint as authentication information related to releasing of the lock status of each of the at least one application.

The inputter may be further configured to receive at least one of a lock pattern, a passcode, and a PIN, and the controller may be further configured to register the lock pattern, the passcode, or the PIN as the authentication information related to the releasing of the lock status.

### MODE OF THE INVENTION

Before describing various embodiments of the present disclosure, it is noted that an 'electronic device' may refer to a device displaying various screens, for example, a smartphone, a tablet personal computer (PC), a digital camera, a computer monitor, a personal digital assistant (PDA), an electronic note, a desktop PC, a portable multimedia player (PMP), a media player (e.g., an MP3 player), a wrist watch, a game terminal, or the like.

Hereinafter, the present disclosure will be described in detail with respect to the attached drawings only for illustration without limiting the present disclosure. The following embodiment of the present disclosure is merely intended for specifying the present disclosure, and does not restrict or limit the scope of the present disclosure. Matters that are easily deduced by those of ordinary skill in the part from the detailed description and embodiment of the present disclosure are construed as being included in the scope of the present disclosure.

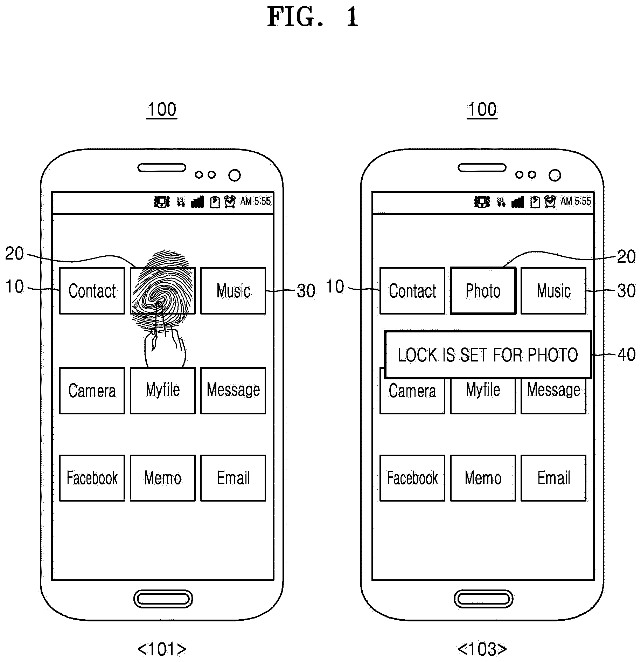

FIG. 1 is a conceptual view for describing a method of controlling a lock status of an application according to an embodiment of the present disclosure.

Referring to FIG. 1, an electronic device controls a display to display a plurality of icons on a screen. In an embodiment, an 'icon' may refer to an image or a symbol displayed to select a function of an application or data. For example, if a user touches an icon, a function of an application mapped (corresponding) to the icon may be executed. In an embodiment, an 'icon' may collectively refer to an item, an object, a folder, an image, etc.

In an embodiment, to avoid confusion of terms according to various embodiments of the present disclosure, when a lock function is set for an application, this may be referred to as 'lock status setting', and when the lock function is released, this may be referred to as 'lock status releasing' or 'lock status setting releasing'.

In an embodiment, regarding an application for which a lock function is set, a lock-unreleased status will be referred to as a 'lock status' and a lock-released status will be referred to as a 'lock release status'.

In an embodiment, as shown in '101', when a user touches an icon 20 among a plurality of icons 10 through 30 by a finger, a lock status of an application corresponding to the touched icon 20 may be set. For example, upon receiving a touch input on an icon, the electronic device may detect a duration for which the touch input is received, that is, a duration of the touch input or a duration for which a touch is maintained. If it is determined that the duration for which the touch input is received is greater than or equal to a preset threshold period, the electronic device obtains fingerprint information of the user. In an embodiment, the electronic device sets the lock status of the application corresponding to the icon based on the obtained fingerprint information of the user. For example, the electronic device may register the fingerprint information of the user as setting for releasing the lock status of the application. For instance, if the user touches an icon for executing an application in a status where the application is locked (or in the lock status of the application), whether to release the lock status of the application may be determined according to whether the user fingerprint information obtained during a touch and the registered user fingerprint information are identical to each other.

In an embodiment, different fingerprint information of the same user for a plurality of applications may be registered for lock status setting. For example, based on fingerprint information regarding ten fingers of the same user, different fingerprint information for each of a plurality of applications may be registered for lock status setting. In another embodiment, different fingerprint information of a plurality of users may be registered for lock status setting.

In an embodiment, a plurality of pieces of fingerprint information may be registered for lock status setting of one application.

In an embodiment, if fingerprint information of a user is obtained, fingerprint information obtained in an electronic device and registered fingerprint information may be compared with each other to set the lock status of an application. For example, the electronic device may store previously registered user fingerprint information for overall function control (e.g., release of a screen lock status, charging/payment etc.). Once a touch input on an icon is received and user fingerprint information is obtained, if the obtained fingerprint information is identical to the previously registered user fingerprint information, the lock status of an application corresponding to the touch-input icon may be set.

In an embodiment, a touch input for lock status setting of the application may be one touch input. For example, if a duration for which one touch is input is greater than or equal to a preset threshold period, the lock status of an application may be set based on user fingerprint information obtained during the one touch.

In another embodiment, a touch input for lock status setting of the application may be two or more touch inputs. For example, the electronic device may receive another touch input from a user if the duration for which one touch is input is greater than or equal to the preset threshold period. Once another touch input is received from the user, the user fingerprint information is obtained and the lock status of an application may be set based on the obtained fingerprint information.

In an embodiment, if a duration for which a touch on an icon is input from the user is greater than or equal to a threshold period, input of a lock pattern, a passcode, a personal identification number (PIN), etc., may be received and the lock status of the application may be set based on the received input. For example, if the duration for which the touch on the icon is input from the user is greater than or equal to the threshold period, the electronic device may output a screen that guides input of a lock pattern (or drawing of the lock pattern) for lock status setting of the application. Upon receiving a lock pattern input from the user, the electronic device stores the lock pattern input for lock status setting. For example, the electronic device may store the lock pattern input as authentication information for releasing the lock status of the application.

In an embodiment, if the lock of the application is set, the electronic device may release the lock status that is set for the application based on the user's touch input. For example, if the duration for which the touch on the icon is input is greater than or equal to the preset threshold period, the electronic device may determine whether the lock of the application is set. Once the lock is set for the application, the electronic device obtains the user fingerprint information and releases the lock status of the application based on the obtained fingerprint information. For example, the electronic device compares the obtained fingerprint information with the previously registered fingerprint information and if the obtained fingerprint information is identical to the previously registered fingerprint information, the lock status set for the application corresponding to the icon on which the touch input is received may be released.

In an embodiment, the electronic device releases the lock status of the application based on the touch input on the icon corresponding to the application for which the lock status is set. For example, upon receiving the touch input on the icon corresponding to the application for which the lock status is set from the user, the electronic device may obtain user fingerprint information. The electronic device compares fingerprint information registered for lock status setting of the application with obtained information, and if the registered fingerprint information is identical to the obtained information, the electronic device releases the lock status of the application.

Reference numeral 103 indicates a screen that outputs a lock status setting notification for an application (e.g., a photo application) corresponding to a touch-input icon 20. For example, if the lock of the photo application is set, the electronic device outputs a notification 40 "lock is set for Photo". However, the present disclosure is not limited to this example, and a notification may be output in various ways. For example, the electronic device may output lock status setting for an application by outputting a voice, vibration, or light.

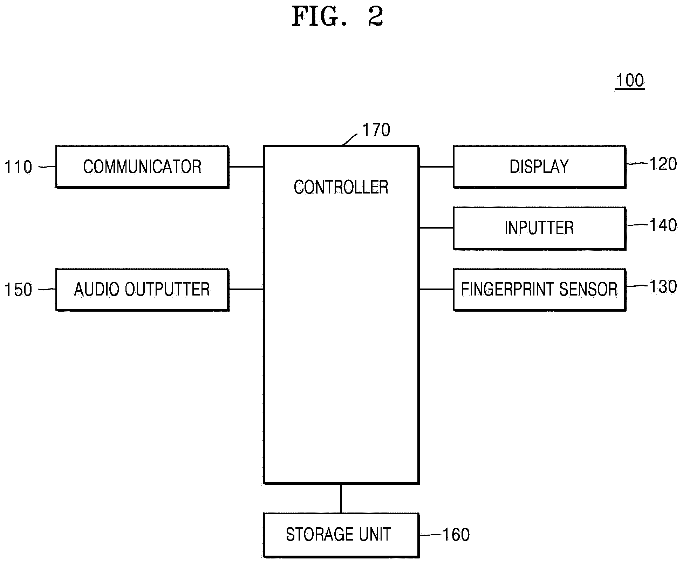

Hereinafter, a method of controlling a lock status of an application and an electronic device 100 will be described in detail with reference to FIGS. 2 through 9.

FIG. 2 is a block diagram of the electronic device 100 according to an embodiment of the present disclosure.

Referring to FIG. 2, the electronic device 100 may include a communicator 110, a display 120, a fingerprint sensor 130, an inputter 140, an audio outputter 150, a storage unit 160, and a controller 170.

In an embodiment, the communicator 110 may be added if the electronic device 100 supports a communication function, and may be omitted if the electronic device 100 does not support a communication function. The communicator 110 establishes a communication channel having a scheme set with a supportable network (a mobile communication network, etc.) to transmit and receive signals related to wireless communication such as voice communication, video communication, etc., and message-service-based data communication such as a short message service (SMS), a multimedia messaging service (MMS), Internet, etc., under control of the controller 170. The communicator 110 may include a transceiver that up-converts and amplifies a frequency of a transmission signal and low-noise-amplifies and down-converts a frequency of a received signal. The communicator 110 may establish a data communication channel for a message service to process data transmission and reception based on the message service, under control of the controller 170. Herein, the communication channel may include a mobile communication channel such as code division multiple access (CDMA), time division multiple access (TDMA), orthogonal frequency division multiple access (OFDMA), etc., and an Internet communication channel such as a wired Internet network, a wireless Internet network, etc.

In an embodiment, the communicator 110 may transmit fingerprint information obtained from the user to a server, etc., that executes a fingerprint authentication service, under control of the controller 170. For example, if application lock status setting, application lock status releasing, authentication for application lock status releasing, etc., are performed on the server, the communicator 110 may transmit user fingerprint information obtained by a touch input on an icon corresponding to an application to a server, etc., under control of the controller 170.

In an embodiment, the display 120 may display data on a screen under control of the controller 170. For example, once the controller 170 processes (e.g., decodes) data and stores the processed data in a buffer, the display 120 may convert the data stored in the buffer into an analog signal and display the analog signal on the screen. The display 120 displays various screens corresponding to the use of the electronic device 100, e.g., a lock screen, a home screen, an application execution screen, a menu screen, a keypad screen, a message writing screen, an Internet screen, and so forth.

In an embodiment, the display 120 may include a liquid crystal display (LCD), an active matrix organic light emitted diode (AMOLED), a passive matrix organic light emitted diode (PMOLED), a flexible display, or a transparent display.

In an embodiment, the display 120 displays at least one icon on the screen under control of the controller 170.

In an embodiment, if the lock of an application is set or released or the lock status of the application is released under control of the controller 170, the display 120 outputs a corresponding screen.

In an embodiment, if a touch on an icon is input, the fingerprint sensor 130 recognizes an input user finger and scans (or captures) a fingerprint of the recognized finger. In an embodiment, information about the scanned fingerprint is stored in the storage unit 160. In an embodiment, the controller 170 extracts a feature point (minutia) of a finger from fingerprint information. The controller 170 may compare registered fingerprint information with scanned (or obtained) fingerprint information based on fingerprint feature point comparison.

In an embodiment, the fingerprint sensor 130 is implemented by being embedded on the display 120. For example, if the fingerprint sensor 130 is a photo sensor, the fingerprint sensor 130 may be implemented in such a way that the photo sensor is embedded in the display 120.

In another embodiment, the fingerprint sensor 130 is implemented by being stacked on the display 120. For example, if the fingerprint sensor 130 includes a transparent scan film, the fingerprint sensor 130 may be implemented in such a way that the transparent scan film is stacked on the display 120.

The configuration of the fingerprint sensor 130 is not limited to the above-described examples, and may be implemented in various ways.

In an embodiment, the inputter 140 may include a touch panel or a key inputter 140. In an embodiment, the touch panel generates a touch input (or a touch event) in response to a touch by a user's finger, etc., and delivers the generated touch input to the controller 170. The touch panel delivers a touch region, e.g., coordinates included in a region touched by a user's finger to the controller 170, and the controller 170 then determines at least one of the coordinates included in the touch region as touch coordinates. In an embodiment, the controller 170 generates touch input time information regarding an icon based on the touch input from the touch panel. For example, the controller 170 may calculate a duration for which information about coordinates of a region where an icon is displayed is received from the touch panel, and generate touch input time information based on the calculated duration.

In an embodiment, the key inputter may include multiple keys for receiving numeric or character information and setting various functions. These keys may include a menu call key, a screen on/off key, a power on/off key, a volume control key, and so forth. The key inputter generates a key event related to user setting and function control of the electronic device 100 and delivers the key event to the controller 170. A key of the key inputter may be referred to as a hard key, and a virtual key displayed on the display 120 may be referred to as a soft key.

In an embodiment, the audio outputter 150 outputs audio (e.g., voice, sound, etc.) input through the communicator 110. The audio outputter 150 outputs audio stored in the storage unit 160 under control of the controller 170. The audio outputter 150 may include at least one of a speaker, a headphone output terminal, and a Sony/Phillips digital interface (S/PDIF) output terminal, and so forth. The audio outputter 150 may include a combination of the speaker, the headphone output terminal, and the S/PDIF output terminal.

In an embodiment, the audio outputter 150 outputs a corresponding guide sound or effect sound under control of the controller 170, if the lock of an application is set or released or the lock status of the application is released.

In an embodiment, the storage unit 160 stores various data, programs, or applications for driving and controlling the electronic device 100 under control of the controller 170. The storage unit 160 stores input/output signals or data corresponding to driving of the communicator 110, the display 120, the inputter 140, and the audio outputter 150. The storage unit 160 stores a control program for control of the electronic device 100 and the controller 170, an application that is initially provided from a manufacturer or downloaded from an external source, a graphic user interface (GUI) associated with the application, an object (e.g., an image, a text, an icon, a button, etc.) for providing the GUI, user information, a document, databases, or related data.

In an embodiment, the term "storage unit 160" may include the storage unit 160, a read only memory (ROM) or random access memory (RAM) of the controller 170, or a memory card (e.g., a micro secure digital (SD) card, a universal serial bus (USB) memory, etc., not shown) mounted on the electronic device 100. The storage unit 160 may include a non-volatile memory, a volatile memory, a hard disk drive (HDD), or a solid state drive (SSD).

In an embodiment, the storage unit 160 stores user's fingerprint information. For example, the storage unit 160 may store fingerprint information registered for lock status setting of an application. In an embodiment, the storage unit 160 stores fingerprint information for lock status setting for each application. In another embodiment, the storage unit 160 may store plural fingerprint information for one application. In another embodiment, the storage unit 160 may store fingerprint information of a plurality of users for lock status setting.

In an embodiment, the storage unit 160 stores a fingerprint recognition module (or a fingerprint recognition program). For example, the fingerprint recognition module may extract a feature point of a fingerprint scanned (or obtained) by the fingerprint sensor 130 and perform lock status setting or lock status releasing based on the extracted feature point of the fingerprint. However, the fingerprint recognition module may be stored in the storage unit 160 or may be configured independently of the storage unit 160.

In an embodiment, the controller 170 controls overall operations of the electronic device 100 and a signal flow among internal elements of the electronic device 100, and processes data. The controller 170 executes an operating system (OS) and various applications stored in the storage unit 160, if a user input is input or a preset and stored condition is satisfied.

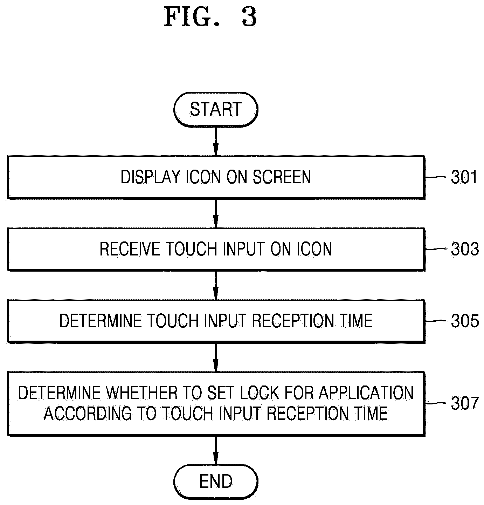

Hereinafter, with reference to FIGS. 3 through 9, a function of controlling a lock status of an application, performed by the controller 170, will be described in more detail.

FIG. 3 is a flowchart for describing a method of controlling a lock status of an application according to an embodiment of the present disclosure.

In operation 301, the controller 170 controls the display 120 to display an icon on the screen. In an embodiment, the screen may be a home screen, a menu screen, or the like. In an embodiment, the screen may include at least one page that may include an icon. In an embodiment, an icon may be a folder including various files.

In operation 303, the controller 170 receives a touch input on an icon. In an embodiment, a touch input on an icon may be a holding input that maintains a direct touch (or a contact touch) on the icon for a specific period. In another embodiment, a touch input on an icon may be a hovering input (or an indirect touch input) maintained on the icon for a specific period.

In operation 305, the controller 170 detects a duration for which a touch input is received. For example, the controller 170 may continuously receive, from the inputter 140 (or a touch panel), coordinates information of a point at which a user finger is touched, e.g., coordinates information of a point at which a touch input on an icon is maintained. The controller 170 may calculate a duration for which the coordinates information of the point at which the touch input on the icon is maintained is received. The controller 170 determines a touch input time on the icon based on the calculated duration.

In operation 307, the controller 170 determines whether to set a lock status of the application according to the duration for which the touch input is received. For example, if the duration for which the touch input on the icon is maintained is greater than or equal to a preset threshold period, the controller 170 may determine to set the lock status of an application corresponding to the icon (or an application, a function of which is mapped to the icon).

In another example, the controller 170 executes an application corresponding to an icon if a duration for which a touch input on the icon is maintained is less than a preset threshold period. For example, if the duration for which the touch input on the icon of the application is maintained is less than the preset threshold period and the lock of the application is set, the controller 170 may perform authentication to release the lock status. For example, the controller 170 may obtain fingerprint information based on the touch input on the icon. The controller 170 performs authentication to release the lock status by comparing obtained fingerprint information with registered fingerprint information. If the obtained fingerprint information and the registered fingerprint information are identical to each other, the controller 170 releases the lock status set for the application and executes the application. If the obtained fingerprint information is not identical to the registered fingerprint information, the controller 170 maintains the lock status set for the application and controls the display 120 to output a notification guiding re-input for releasing the lock status.

In another embodiment, if the duration for which the touch input on the icon corresponding to the application is maintained is less than the preset threshold period and the lock of the application is not set, the application may be executed.

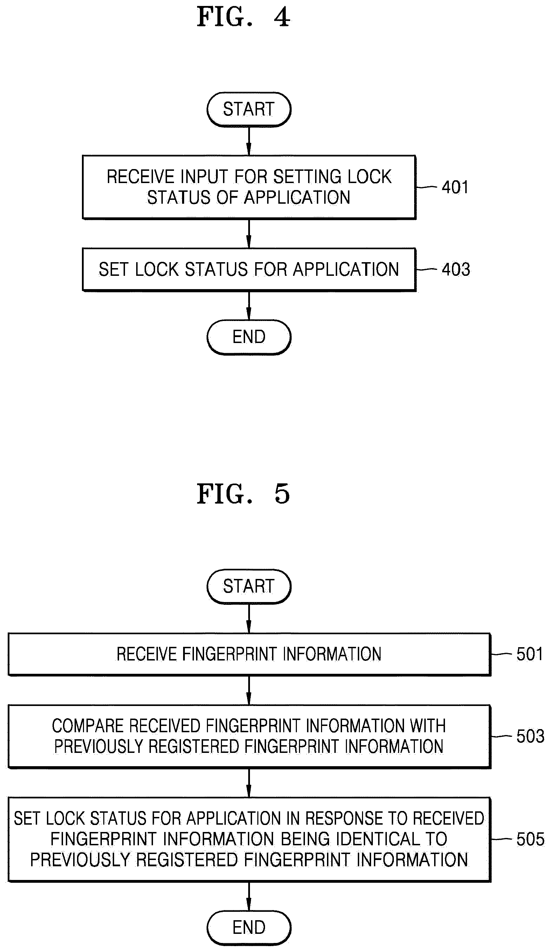

In an embodiment, if the controller 170 determines to set the lock status of the application corresponding to the icon by receiving the touch input on the icon maintained for a specific threshold period or more, the controller 170 may set the lock status of the application based on an input for lock status setting of the application. Hereinafter, a method of setting a lock status of an application based on an input for lock status setting of the application will be described in detail with reference to FIG. 4.

FIG. 4 is a flowchart for describing a method of setting a lock status of an application according to an embodiment of the present disclosure.

In an embodiment, lock status setting of an application in FIG. 4 may be performed if it is determined that a touch input time for an icon is greater than or equal to a preset threshold period and it is determined to set the lock status of the application in FIG. 3.

In operation 401, the controller 170 receives an input for lock status setting of an application.

In an embodiment, the input for lock status setting of the application may be a touch input for obtaining a user fingerprint. For example, the input for lock status setting of the application may be a touch input that is maintained on the icon for a preset period or more. The controller 170 may obtain user fingerprint information based on the touch input on the icon. In an embodiment, the touch input maintained on the icon for a preset period or longer and the touch input for obtaining the user fingerprint may be one (or identical) touch input. In another embodiment, the touch input maintained on the icon for a preset period or longer and the touch input for obtaining the user fingerprint may be a separate (or independent) touch input. For example, the controller 170 may receive the touch input maintained on the icon for the preset period or more and receive a touch input on the icon to obtain a user fingerprint again.

In an embodiment, the input for lock status setting of the application may be a lock pattern setting input. For example, if the controller 170 determines to set the lock status of the application, the controller 170 may control the display 120 to output an indication for inputting the lock pattern. The controller 170 receives a lock pattern input for lock status setting of the application through the inputter 140.

In another embodiment, the input for lock status setting of the application may be a passcode input or a PIN input. For example, if the controller 170 determines to set the lock status of the application, the controller 170 may control the display 120 to output an indication for inputting the passcode or the PIN. The controller 170 receives a passcode or PIN input for lock status setting of the application through the inputter 140. However, the input for lock status setting of the application is not limited to this example.

In operation 403, the controller 170 sets the lock status of the application. For example, the controller 170 may set the lock status for the application based on the user fingerprint information obtained based on the touch input. The controller 170 may register the obtained user fingerprint as a reference fingerprint used to perform authentication for releasing the lock status. Upon receiving a touch input for executing the application, the controller 170 releases the lock status based on whether the fingerprint obtained through the touch input and the fingerprint registered as the reference fingerprint are identical to each other.

In another example, the controller 170 may set the lock status for the application based on the passcode or PIN input. For example, the controller 170 may set the lock status of the application in such a way that the lock status of the application is released if passcode or PIN authentication is successful for the application. In an embodiment, the controller 170 stores the passcode or PIN for the lock status of the application in such a way that the passcode or PIN is mapped to the application.

FIG. 5 is a flowchart of a method of setting a lock status of an application by using fingerprint information according to an embodiment of the present disclosure.

In an embodiment, lock status setting of an application in FIG. 5 may be performed if it is determined that a touch input time for an icon is greater than or equal to a preset threshold period and it is determined to set the lock status of the application in FIG. 3.

In operation 501, the controller 170 receives (or obtains) user fingerprint information. In an embodiment, the touch input maintained on the icon for a preset period or longer and the touch input for obtaining the user fingerprint may be one (or identical) touch input. In another embodiment, the touch input maintained on the icon for a preset period or longer and the touch input for obtaining the user fingerprint may be a separate (or independent) touch input.

In operation 503, the controller 170 compares the received fingerprint information with previously registered fingerprint information. In an embodiment, the previously registered fingerprint may be a fingerprint registered for lock status setting of the application. For example, the previously registered fingerprint may be a fingerprint registered for lock status setting for each application. In an embodiment, a plurality of fingerprints may be registered. For example, a fingerprint registered for an application may be a fingerprint for which fingerprint information of at least one of a thumb, an index finger, a middle finger, a ring finger, and a little finger of a user is registered.

In another example, the previously registered fingerprint may be a fingerprint registered to perform overall function control (or authentication) of the electronic device 100. For example, the controller 170 may register at least one user fingerprint for screen lock or charging/payment. The controller 170 uses, for application setting, a fingerprint registered to perform a function of the electronic device 100 such as screen lock or charging/payment.

In operation 505, the controller 170 sets the lock status of the application if the received fingerprint information and the previously registered fingerprint information are identical to each other. For example, the controller 170 may register the obtained fingerprint as a reference fingerprint used to perform authentication for releasing the lock status, if the received fingerprint information and the previously registered fingerprint information are identical to each other.

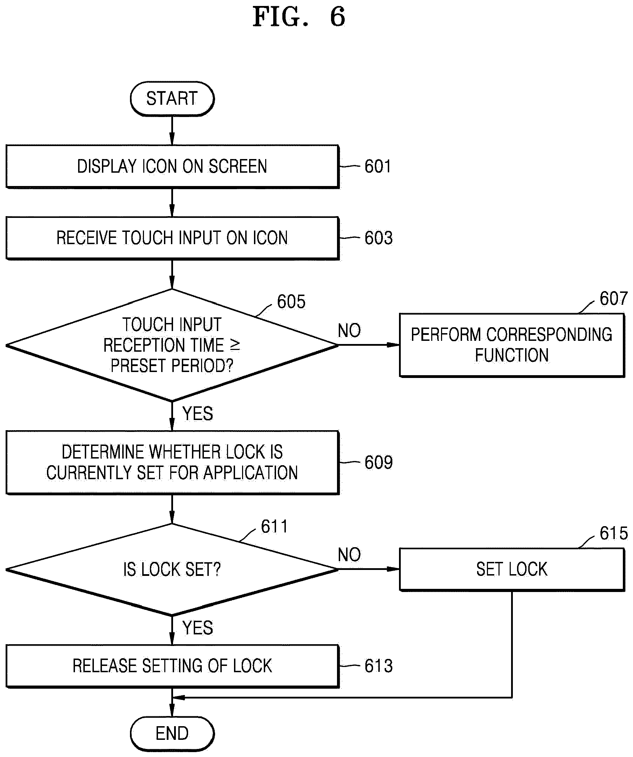

FIG. 6 is a flowchart of a method of controlling a lock status of an application according to another embodiment of the present disclosure.

Referring to FIG. 6, in operation 601, the controller 170 controls the display 120 to display an icon on the screen. In an embodiment, the screen may be a home screen, a menu screen, or the like. In an embodiment, the screen may include at least one page that may include an icon. In an embodiment, an icon may be a folder including various files.

In operation 603, the controller 170 receives a touch input on an icon. In an embodiment, a touch input on an icon may be a holding input that maintains a direct touch (or a contact touch) on the icon for a specific period. In another embodiment, a touch input on an icon may be a hovering input (or an indirect touch input) maintained on the icon for a specific period.

In operation 605, the controller 170 determines a duration for which a touch input is received. For example, the controller 170 may continuously receive, from the inputter 140 (or a touch panel), coordinates information of a point at which a user finger is touched, e.g., coordinates information of a point at which a touch input on an icon is maintained. The controller 170 may calculate a duration for which the coordinates information of the point at which the touch input on the icon is maintained is received. The controller 170 determines a touch input time on the icon based on the calculated duration.

In operation 607, the controller 170 performs a corresponding function if determining in operation 605 that the touch input time is less than a preset threshold period. For example, the controller 170 may execute an application corresponding to the touch-input icon. If the lock is set for the application, the controller 170 performs authentication for releasing the lock status. For example, the controller 170 may compare a fingerprint obtained by the touch input with a registered fingerprint. If the fingerprint obtained by the touch input and the registered fingerprint are identical to each other, the controller 170 releases the lock status set for the application and executes the application. If the fingerprint obtained by the touch input is not identical to the registered fingerprint, the controller 170 maintains the lock status set for the application and controls the display 120 to output a notification guiding re-input for releasing the lock status.

In operation 609, the controller 170 determines whether the lock is currently set for the application if determining in operation 605 that the touch input time is greater than or equal to the preset threshold period. For example, the controller 170 may determine whether the lock for the application is set or not.

In operation 611, if determining that the lock is set for the application, the controller 170 releases the lock status set for the application. In an embodiment, the controller 170 obtains user fingerprint information for lock status setting releasing of an application. The controller 170 compares the obtained fingerprint information with the fingerprint information registered in application lock status setting. If the obtained fingerprint information and the registered fingerprint information are identical to each other, the controller 170 releases the application lock status setting. In an embodiment, if the controller 170 releases the application lock status setting, the controller 170 deletes the fingerprint information registered in the application lock status setting. In another embodiment, if the controller 170 releases the application lock status setting, the controller 170 deletes a mapping relationship between the fingerprint information registered in the application lock status setting and the application.

In operation 613, if determining that the lock is not set for the application, the controller 170 sets the lock status for the application. For example, the controller 170 may set the lock status for the application based on the user fingerprint information obtained through the touch input. For example, the controller 170 may set the lock status of the application by registering the obtained user fingerprint as a reference fingerprint used to perform authentication for releasing the lock status.

In another example, the controller 170 may set the lock status for the application based on the passcode or PIN input. For example, the controller 170 may set the lock status of the application in such a way that the lock status of the application is released if passcode or PIN authentication is successful for the application. In an embodiment, the controller 170 stores the passcode or PIN for the lock status of the application in such a way that the passcode or PIN is mapped to the application.

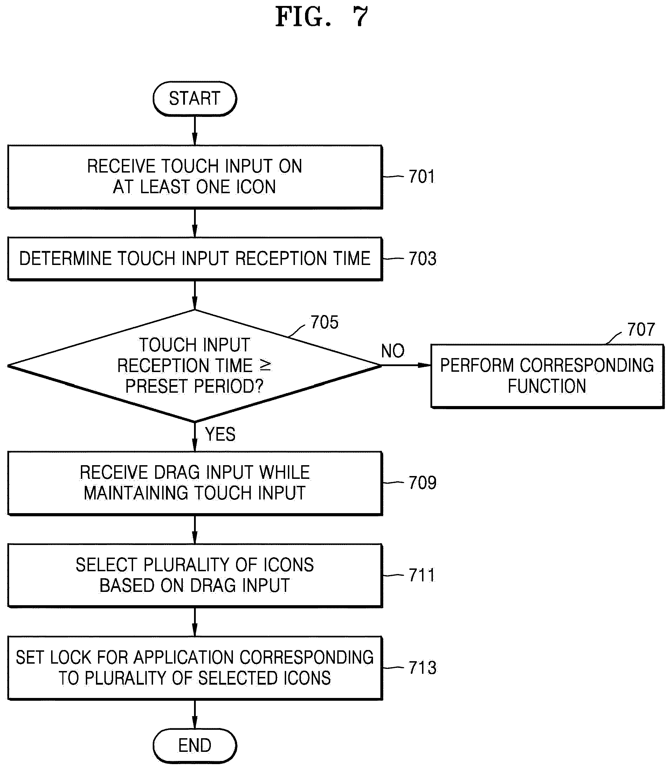

FIG. 7 is a flowchart of a method of controlling a lock status of an application according to another embodiment of the present disclosure.

Referring to FIG. 7, in operation 701, the controller 170 receives a touch input on at least one icon displayed on the screen.

In an embodiment, the touch input on the at least one icon may be a touch holding input that maintains a touch on at least one icon for a specific period.

In operation 703, the controller 170 determines a touch input reception time on the at least one icon. For example, the controller 170 may continuously receive, from the inputter 140 (or a touch panel), coordinates information of a point touched by a user finger, e.g., coordinates information of a point at which a touch input on an icon is maintained. The controller 170 may calculate a duration for which the coordinates information of the point at which the touch input on the icon is maintained is received. The controller 170 determines a touch input time on the icon based on the calculated duration.

In operation 707, the controller 170 performs a corresponding function if determining in operation 705 that the touch input time is less than a preset threshold period. For example, the controller 170 may execute an application corresponding to the touch-input icon. If the lock is set for the application, the controller 170 performs authentication for releasing the lock status. For example, the controller 170 may compare a fingerprint obtained by the touch input with a registered fingerprint. If the fingerprint obtained by the touch input and the registered fingerprint are identical to each other, the controller 170 releases the lock status set for the application and executes the application. If the fingerprint obtained by the touch input is not identical to the registered fingerprint, the controller 170 maintains the lock status set for the application and controls the display 120 to output a notification guiding re-input for releasing the lock status.

In operation 709, the controller 170 receives a drag input while maintaining a touch input, if it is determined in operation 705 that the touch input time is greater than or equal to the preset threshold period. However, the present disclosure is not limited to this example, and the controller 170 may release the touch input (remove the touching finger from the icon) and then receive a drag input again.

In operation 711, the controller 170 selects a plurality of icons based on the drag input. For example, the controller 170 may select an icon displayed on a region overlapping a dragged trajectory. In other words, the controller 170 may select at least one icon disposed on a trajectory path of the drag input. In another embodiment, the controller 170 may select at least one icon included in a region corresponding to the drag input. For example, the controller 170 may select an icon included in a virtual rectangle generated using a start point and an end point of the drag input. In another embodiment, the controller 170 may select an icon included in a virtual closed curve generated using the trajectory path of the drag input.

In operation 713, the controller 170 sets a lock status for an application corresponding to the plurality of selected icons.

For example, the controller 170 may set a lock status for the plurality of applications based on user fingerprint information obtained through the touch input. The controller 170 may register the obtained user fingerprint as a reference fingerprint used to perform authentication for releasing the lock status. If receiving a touch input for executing any one of the plurality of applications for which the lock is set, the controller 170 releases the lock status based on whether the fingerprint obtained through the touch input and the fingerprint registered as the reference fingerprint are identical to each other.

In an embodiment, a process of obtaining the user fingerprint information may be performed between operation 705 and operation 709. For example, if the touch input reception time is greater than or equal to the preset threshold period, the controller 170 may obtain the fingerprint information. However, the present disclosure is not limited to this example. For example, a drag is input while maintaining a touch input, and the fingerprint information may be obtained at a point in time when the input of the drag is released.

In an embodiment, in FIG. 7, operations 703 and 705 may be performed after operation 711. For example, in a touch state (or a touch-down state) of at least one icon, a drag may be input with respect to a region in which a plurality of icons are displayed, and a duration for which a touch input is maintained with respect to a point before the release of the touch input may be determined. The controller 170 performs operation 713 if the determined duration is greater than or equal to the preset threshold period.

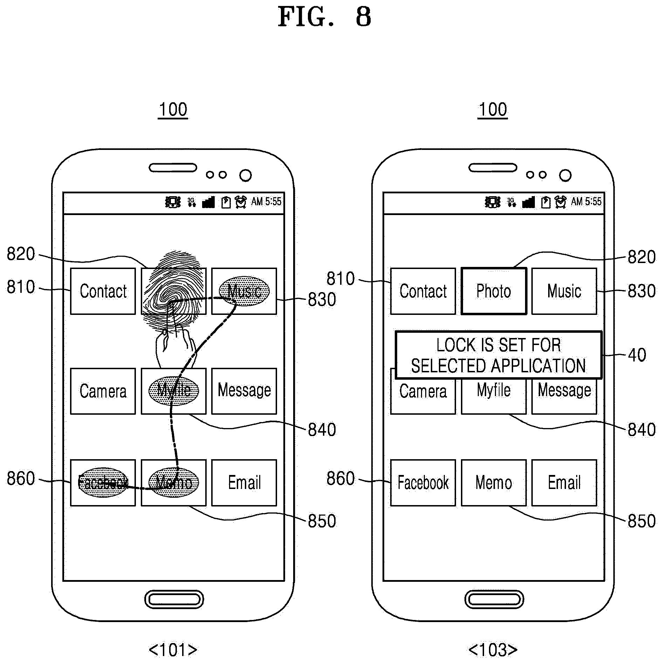

FIG. 8 is an exemplary diagram for describing a method of controlling a lock status of an application according to another embodiment of the present disclosure.

Referring to FIG. 8, in 801, the controller 170 receives a touch input on an icon. The controller 170 may determine whether a touch input reception time on the icon is greater than or equal to a threshold period. In an embodiment, the controller 170 may obtain user fingerprint information if the touch input reception time is greater than or equal to the threshold period.

In an embodiment, the controller 170 may receive a drag input with respect to a region where an icon 830, an icon 840, an icon 850, and an icon 860 are displayed, while maintaining a touch on an icon 820. Upon receiving a drag input on the icons 830 through 860, the controller 170 may set a lock status on the icons 830 through 860.

In an embodiment, the controller 170 sets a lock status with respect to applications corresponding to the icons 830 through 860 based on an obtained fingerprint. For example, if receiving an input for executing any one of the applications corresponding to the icons 830 through 860 for which the lock is set, the controller 170 may release a lock status for an application for which the input is received through fingerprint authentication.

In an embodiment, a drag with respect to the icons 830 through 860 as well as the touch-input icon 820 is input, and according to a touch input time with respect to the icon 860 displayed on a region where the drag is released, the lock for applications corresponding to a plurality of icons 820 through 860 may be set. For example, if a drag with respect to the icons 830 through 860 is sequentially input in a touch state with respect to the icon 820 and a touch on the icon 860 is maintained for a preset threshold period or more, the lock may be set for the applications with respect to the plurality of icons 820 through 860.

In 803, the controller 170 controls the display 120 to output a lock status setting notification for applications corresponding to selected icons. For example, the controller 170 may control the display 120 to output a phrase "lock is set for selected application". However, the lock status setting notification is not limited to this example, and may be output by outputting voice, vibration, or light.

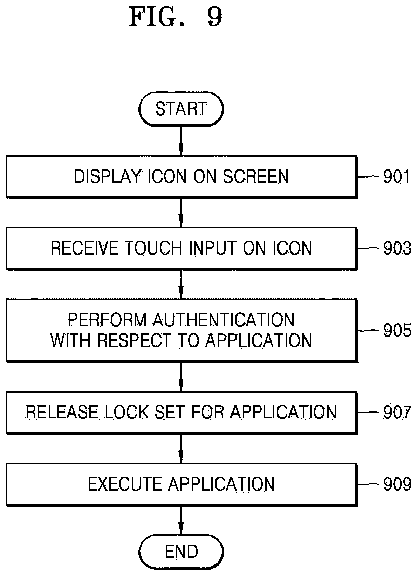

FIG. 9 is a flowchart of a method of releasing a lock status of an application according to an embodiment of the present disclosure.

In operation 901, the controller 170 controls the display 120 to display an icon on the screen.

In operation 903, the controller 170 receives a touch input on an icon. In an embodiment, a touch input on an icon may be a touch input received for a preset threshold period or less.

In operation 905, the controller 170 performs authentication with respect to an application corresponding to a touch-input icon. For example, if the lock is set for an application corresponding to the icon, the controller 170 may perform authentication for releasing a lock status of the application. If authentication for releasing the lock status is fingerprint authentication, the controller 170 may obtain user fingerprint information and perform fingerprint authentication based on an obtained fingerprint. For example, the controller 170 may compare a registered fingerprint with an obtained fingerprint to determine whether the registered fingerprint is identical to the obtained fingerprint.

In another example, if authentication for releasing the lock status is authentication based on setting of a lock pattern, a passcode, or a PIN, the controller 170 may control the display 120 to output a notification guiding input of the lock pattern, the passcode, or the PIN. The controller 170 compares the input lock pattern, passcode, or PIN with a preset lock pattern, passcode, or PIN to determine whether the input lock pattern, passcode, or PIN is identical to the preset lock pattern, passcode, or PIN.

In operation 907, the controller 170 releases the lock status for the application. For example, in case of fingerprint authentication, the controller 170 may compare a registered fingerprint with an obtained fingerprint and release the lock status for the application if the registered fingerprint is identical toes the obtained fingerprint. In another example, in case of authentication using the lock pattern, passcode, or PIN, the controller 170 may release the lock status for the application if the input lock pattern, passcode, or PIN is identical to the preset lock pattern, passcode, or PIN.

In operation 909, the controller 170 executes the application. For example, the controller 170 may play MP3 or video. In another example, the controller 170 may open a folder or control the display 120 to display the application corresponding to the icon.

So far, embodiments of the present disclosure have been described. It would be understood by those of ordinary skill in the art that the present disclosure may be implemented in a modified form without departing from the essential characteristics of the present disclosure. Therefore, the disclosed embodiments should be considered in an illustrative sense rather than a restrictive sense. The range of the embodiments will be in the appended claims, and all of the differences in the equivalent range thereof should be understood to be included in the embodiments.

## Claims

1. A method of controlling a lock status of an application in an electronic device, the method comprising:
receiving a first touch input on a first icon displayed on a screen;
detecting a first duration for which the first touch input is maintained; and
setting a lock status for an application corresponding to the first icon in response to the first duration being greater than or equal to a first threshold period.

2. The method of claim 1, wherein the setting of the lock status comprises:
detecting a first fingerprint from the first touch input; and
registering the first fingerprint as authentication information for releasing the lock status.

3. The method of claim 2, wherein the registering of the first fingerprint comprises:
comparing the first fingerprint with a fingerprint previously registered in the electronic device; and
registering the first fingerprint in response to being determined that the first fingerprint is identical to the previously registered fingerprint based on a result of the comparing.

4. The method of claim 2, further comprising:
releasing the lock status of the application corresponding to the first icon,
wherein the releasing of the lock status comprises:
receiving a second touch input on the first icon;
detecting a second duration for which the second touch input is maintained;
detecting a second fingerprint from the second touch input based on a result of comparing the second duration with a second threshold period;
comparing the second fingerprint with the registered first fingerprint; and
releasing the lock status in response to being determined that the second fingerprint is identical to the first fingerprint based on a result of the comparing the second fingerprint with the registered first fingerprint.

5. The method of claim 4, wherein the setting of the lock status comprises:
registering a plurality of different fingerprints as authentication information for the releasing of the lock status,
wherein the releasing of the lock status comprises:
comparing the second fingerprint with at least one of the plurality of registered fingerprints; and
releasing the lock status in response to being determined that the second fingerprint is identical to the at least one of the plurality of registered fingerprints based on a result of the comparing the second fingerprint with at least one of the plurality of registered fingerprints.

6. The method of claim 2, further comprising:
receiving a third touch input on a second icon displayed on the screen;
detecting a third duration for which the third touch input is maintained; and
setting a lock status for an application corresponding to the second icon in response to the third duration being greater than or equal to a third threshold period,
wherein the setting of the lock status for the application corresponding to the second icon comprises:
detecting a third fingerprint from the third touch input; and
registering the third fingerprint as authentication information for the releasing of the lock status of the application corresponding to the second icon, and
wherein the first fingerprint and the third fingerprint are identical to or different from each other, the first threshold period and the third threshold period are identical to or different from each other, and a user having the first fingerprint and a user having the third fingerprint are identical to or different from each other.

7. The method of claim 1, wherein the setting of the lock status comprises:
receiving a drag input in response to the first duration being greater than or equal to the first threshold period; and
setting a lock status for at least one of applications corresponding to at least one third icon included in a region corresponding to the drag input and applications corresponding to at least one fourth icon disposed on a trajectory path of the drag input.

8. The method of claim 7, wherein the setting of the lock status comprises:
detecting a fingerprint from the first touch input; and
registering the detected fingerprint as authentication information for the releasing of the lock status of each of the at least one application.

9. The method of claim 1, wherein the setting of the lock status comprises:
receiving at least one of a lock pattern, a passcode, and a personal identification number (PIN); and
registering the lock pattern, the passcode, or the PIN as the authentication information for the releasing of the lock status.

10. An electronic device comprising:
a display configured to display a first icon;
an inputter configured to receive a first touch input on the first icon; and
a controller configured to detect a first duration for which the first touch input is maintained and to set a lock status for an application corresponding to the first icon in response to the first duration being greater than or equal to a first threshold period.

11. The electronic device of claim 10, further comprising:
a fingerprint sensor configured to detect a first fingerprint from the first touch input,
wherein the controller is further configured to register the first fingerprint as authentication information for releasing the lock status.

12. The electronic device of claim 11, wherein the inputter is further configured to receive a second touch input on the first icon, and the controller is further configured to detect a second duration for which the second touch input is maintained, to detect a second fingerprint from the second touch input based on a result of comparing the second duration with a second threshold period, to compare the second fingerprint with the registered first fingerprint, and to release the lock status in response to being determined that the second fingerprint is identical to the first fingerprint based on a result of the comparing the second fingerprint with the registered first fingerprint.

13. The electronic device of claim 12, wherein the controller is further configured to register a plurality of different fingerprints as authentication information for the releasing of the lock status, to compare the second fingerprint with at least one of the plurality of registered fingerprints, and to release the lock status in response to being determined that the second fingerprint is identical to the at least one of the plurality of registered fingerprints based on a result of the comparing the second fingerprint with at least one of the plurality of registered fingerprints.

14. The electronic device of claim 11, wherein the inputter is further configured to receive a third touch input on a second icon displayed on the screen, and the controller is further configured to detect a third duration for which the third touch input is maintained, to set a lock status for an application corresponding to the second icon in response to the third duration being greater than or equal to a third threshold period, to detect a third fingerprint from the third touch input, and to register the third fingerprint as authentication information for the releasing of the lock status of the application corresponding to the second icon, and wherein the first fingerprint and the third fingerprint are identical to or different from each other, the first threshold period and the third threshold period are identical to or different from each other, and a user having the first fingerprint and a user having the third fingerprint are identical to or different from each other.

15. The electronic device of claim 10, wherein the inputter is further configured to receive a drag input in response to the first duration being greater than or equal to the first threshold period, and the controller is further configured to set a lock status for at least one of applications corresponding to at least one third icon included in a region corresponding to the drag input and applications corresponding to at least one fourth icon disposed on a trajectory path of the drag input.
